# EUROPÄISCHE PATENTSCHRIFT

(11) **EP 4 306 716 B1**
(45) Veröffentlichungstag und Bekanntmachung des Hinweises auf die Patenterteilung: **18.02.2026**
(21) Anmeldenummer: 22184911.0
(22) Anmeldetag: 14.07.2022
(51) Int. Cl.: E01C 19/48, B60H 1/00, B60H 1/24

(54) **STRASSENBAUMASCHINE MIT GEBLÄSEEINRICHTUNG**
ROAD CONSTRUCTION MACHINE WITH BLOWER DEVICE
MACHINE DE CONSTRUCTION ROUTIÈRE AVEC DISPOSITIF DE SOUFFLAGE

(43) Veröffentlichungstag der Anmeldung: 17.01.2024
(73) Patentinhaber: Joseph Vögele AG, 67067 Ludwigshafen (DE)
(72) Erfinder: WEBER, Stefan, 67127 Rödersheim-Gronau (DE); ERDTMANN, Bernhard, 68535 Edingen Neckarhausen (DE); PONTIUS, Johannes, 66839 Schmelz (DE); KESSLER, Helmut, 67663 Kaiserslautern (DE); RIFFEL, Jan, 68307 Mannheim (DE)
(74) Vertreter: Grünecker Patent- und Rechtsanwälte PartG mbB

(56) Entgegenhaltungen:
- EP-A1- 3 636 466
- EP-A2- 1 162 093
- WO-A1-2022/044586
- DE-A1- 102014 001 488
- DE-A1- 102020 123 723
- DE-U1- 9 407 112
- FR-A3- 3 067 789
- JP-A- 2014 012 933

## Beschreibung

Die vorliegende Erfindung betrifft eine Straßenbaumaschine mit Gebläseeinrichtung gemäß dem Anspruch 1. Ferner betrifft die Erfindung die Verwendung einer Gebläseeinrichtung gemäß Anspruch 13, die als Anbaumodul zur Erzeugung einer Luftbarriere an einer Straßenbaumaschine eingesetzt wird.

Es ist bekannt, dass an Straßenbaumaschinen, insbesondere an einem Straßenfertiger zum Verlegen einer neuen Asphaltschicht, Absaugsysteme eingesetzt werden, die insbesondere aus einem vorderhalb der Einbaubohle positionierten Schneckenraum bei der darin stattfindenden Querverteilung des heißen Einbaumaterials entstehende Dämpfe absaugen und diese oberhalb des Fahrerbedienstands des Straßenfertigers ausstoßen. Ein solches Absaugsystem wird in EP 0 843 044 A1 offenbart.

Des Weiteren entstehen an Straßenfertigern auch im Bereich des Gutbunkers, in welchem das heiße Einbaumaterial bevorratet wird, Dämpfe, denen insbesondere ein Fahrer des Straßenfertigers ausgesetzt ist. Um diese Dämpfe abzusaugen, schlägt EP 0 843 044 A1 eine weitere Absaugeinrichtung vor. Auch diese Absaugeinrichtung stößt die aus dem Gutbunkerbereich abgesaugten Dämpfe oberhalb des Dachs aus.

In der Praxis entstehen insbesondere auch bei einem Materialübergabeprozess, bei welchem der Straßenfertiger mit frischem Einbaumaterial, beispielsweise durch ein vorausfahrendes Beschickerfahrzeug oder mittels eines Lastwagens, versorgt wird, im Bereich des Gutbunkers Dämpfe, die nach hinten zum Bedienstand des Fahrers ziehen.

DE 10 2020 123 723 A1 offenbart einen Straßenfertiger mit einem Bedienstand, der eine Luftdüseneinheit aufweist, die dazu ausgebildet ist, einen Luftschleier um den Bedienstand zu erzeugen. Die Luftdüseneinheit kann in einem Dach des Bedienstands integriert sein. Hiermit soll verhindert werden, dass aus beim Einbau entstehende Dämpfe in den Bereich des Fahrers gelangen.

Die vorangehend beschriebenen Absaug-/Gebläsesysteme rufen einen hohen Konstruktionsaufwand hervor, da sie für jeden Maschinentypen unterschiedlich gebaut sind. Baureihenübergreifend entstehen damit verschiedene Spezialanfertigungen, wodurch Herstellungskosten erhöht werden.

WO2022/044586A1 offenbart eine Gebläseeinrichtung, die sich innerhalb eines Fahrzeugs als Gebläsemodul an einer Kopfstütze eines Fahrzeugsitzes montieren lässt.

EP3636466A1 offenbart ein Luftreinigungsgerät, welches sich mittels einer Adapterplatte an einer Rückseite einer Kopfstütze eines Fahrzeugsitzes befestigen lässt.

JP2014012933A offenbart einen Straßenfertiger mit einer Gebläseeinrichtung, die auf einem Bohlenkörper montiert ist, um oberhalb eines Schneckenraums einen Luftschleier zu bilden, damit sich darunter durch die Querverteilung entstehende Dämpfe besser absaugen lassen.

DE9407112U1 offenbart eine Kompaktluftschleieranlage für Gebäudeöffnungen, wie Tore, Eingänge und dergleichen.

FR3067789A3 offenbart eine Luftaustrittsdüse, die im Eingangsbereich von Cafés oder eines Restaurants zum Ausbilden eines Luftschleiers konfiguriert ist.

DE102014001488A1 offenbart einen Straßenfertiger mit einem geschlossenen Kabinenaufbau, aus dessen Umgebung sich Luft ansaugen, filtern und als Frischluft innerhalb des Kabinenaufbaus ausstoßen lässt.

Aufgabe der Erfindung ist es, eine Straßenbaumaschine, die in Form eines Straßenfertigers oder eines Beschickerfahrzeugs für einen Straßenfertiger vorliegt, zur Verfügung zu stellen, woran sich die Luftqualität auf dem Bedienstand für einen Bediener verbessern lässt.

Diese Aufgabe wird gelöst mittels einer Gebläseeinrichtung gemäß Anspruch 1. Ferner wird diese Aufgabe gelöst durch die in Anspruch 13 beschriebene Verwendung einer Gebläseeinrichtung. Vorteilhafte Weiterbildungen der Erfindung sind durch die jeweiligen Gegenstände der Unteransprüche gegeben.

Die Erfindung bezieht sich auf eine Straßenbaumaschine, die in Form eines Straßenfertigers oder eines Beschickerfahrzeugs für einen Straßenfertiger vorliegt, und die eine Gebläseeinrichtung aufweist. Die Gebläseeinrichtung umfasst eine Gebläseeinheit zum Erzeugen eines Luftstroms sowie eine mit der Gebläseeinheit verbundene Luftausgabeeinheit, die dazu ausgebildet ist, aus dem mittels der Gebläseeinheit erzeugten Luftstrom an einem Bedienstand der Straßenbaumaschine eine Luftbarriere für einen darin positionierten Bediener zu bilden. Erfindungsgemäß ist die Gebläseeinrichtung zumindest teilweise als ein zur lösbaren Anbringung am Bedienstand der Straßenbaumaschine konfiguriertes, modulares Anbaugerät ausgebildet. Somit lässt sich die erfindungsgemäße Gebläseeinrichtung als eigenständige Funktionseinheit, d.h. unabhängig vom Betrieb eines in der Straßenbaumaschine integrierten, insbesondere zum Absaugen von Dämpfen aus dem Schneckenraum verwendeten Gebläses und/oder Saugaggregats, zum Ausbilden der Luftbarriere einsetzen. Gegenüber solchen, bereits in der Straßenbaumaschine integrierten Gebläse- und/oder Saugaggregaten bildet die erfindungsgemäße Gebläseeinrichtung ein autarkes Anbaumodul aus, das problemlos vom Bediener auf der Baustelle, unabhängig vom vorliegenden Maschinentypen der Straßenbaumaschine, sprich baureihenübergreifend, montiert werden kann. Dies bedeutet, dass die Gebläseeinrichtung als autarkes Anbaumodul standardmäßig an verschiedenen Straßenbaumaschinen zum Einsatz kommen kann, sprich vielseitig einsetzbar ist, infolgedessen sich auch Herstellungskosten reduzieren lassen.

Als Bedienstand zur lösbaren Anbringung der Gebläseeinrichtung kommt insbesondere ein Fahrerbedienstand der Straßenbaumaschine in Frage. Denkbar wäre es allerdings, dass die Gebläseeinrichtung am Bedienstand der Einbaubohle eines Straßenfertigers, sprich am Außenbedienstand des Straßenfertigers, lösbar befestigt ist.

Die Gebläseeinrichtung bildet ein an verschiedenen Maschinentypen anbringbares Standardmodul aus, das trotz seines standardisierten, modularen Aufbaus ein hohes Potential für einen individuellen Einsatz an der Straßenbaumaschine hat. Insbesondere lässt sich die Gebläseeinrichtung dank ihres modularen Aufbaus sowie ihrer autarken Funktionsweise vom Bediener angesichts der vor Ort vorliegenden Wetterlage einfach einstellen, ohne dass dieser dafür in der Maschine integrierte Aggregate verstellen muss. Im Grunde genommen ist es möglich, einen zwischen der erfindungsgemäßen Gebläseeinrichtung und anderen Maschinenaggregaten unabhängigen Betrieb einzurichten, sprich isoliert voneinander laufen zu lassen.

Ferner lässt sich die Gebläseeinrichtung insbesondere im Ganzen, aufgrund deren lösbaren Befestigung, mühelos von der Straßenbaumaschine abmontieren. Beispielsweise kann die Gebläseeinrichtung über Nacht, bei Transportfahrten, für Service- und/oder Reinigungszwecke mit wenigen Handgriffen abgebaut werden.

Die Gebläseeinrichtung bildet vor allem als modulares Anbaugerät ein kompaktes Modul aus, das sich insgesamt am Straßenfertiger in kompakter Bauweise gut sichtbar befestigen lässt, womit sich auch dessen Funktionsfähigkeit einfach überprüfen lässt.

Vorzugsweise weist die Gebläseeinheit mindestens einen Radialventilator auf. Dieser kann Luft axial entlang seiner Motorachse ansaugen und bläst die Luft um 90° versetzt wieder aus. Ein solcher Radialventilator verfügt über einen hohen Wirkungsgrad und eignet sich vor allen Dingen für daran vor- und/oder nachgeschaltete Einheiten, die mit erhöhten Pressungen bzw. Luftdrücken arbeiten. Außerdem eignet sich der Radiallüfter für einen geräuscharmen Betrieb. Denkbar wäre es, dass die Gebläseeinheit anstelle des Radialventilators einen Axialventilator aufweist. Aufgrund dessen kompakter Bauweise ließe sich damit das Gewicht der Gebläseeinrichtung reduzieren, sodass diese einfacher als Anbaugerät für einen Bediener zu handhaben ist.

Eine Variante sieht vor, dass die Gebläseeinheit einen Elektromotor aufweist, insbesondere einen drehzahlregelbaren Elektromotor. Der Elektromotor könnte dafür mit einem eigenen Drehzahlsteuermodul ausgestattet sein, sodass die Gebläseeinrichtung noch besser für verschiedene Maschinentypen in Frage kommt.

Vorzugsweise ist die Gebläseeinrichtung mittels einer Bedienkonsole der Straßenbaumaschine ansteuerbar, beispielsweise über eine zwischen der Gebläseeinrichtung und der Bedienkonsole herstellbare Ethernet-, WLAN- und/oder Bluetooth-Verbindung. Es wäre in diesem Zusammenhang möglich, dass in Abhängigkeit eines oder mehrerer gemessener Prozesswerte während des Betriebs der Straßenbaumaschine eine dynamische Drehzahlregelung des Elektromotors der Gebläseeinrichtung geschieht. Diese Funktion kann beispielsweise mittels der Bedienkonsole der Straßenbaumaschine aufgerufen werden. Die dynamische Drehzahlregelung könnte jedoch auch direkt an der Gebläseeinrichtung aufrufbar sein.

Möglich wäre es, dass sich die Drehzahl der Gebläseeinrichtung mittels eines daran vorgesehenen Bedienelements, beispielsweise mittels eines Drehreglers mit einem Potentiometer einstellen lässt. Alternativ oder ergänzend könnte sich die Drehzahl der Gebläseeinrichtung mittels eines am Bedienstand vorgesehenen Bedienelements, beispielsweise mittels eines Drehreglers mit einem Potentiometer, einstellen lassen.

Eine einfache Variante sieht vor, dass mindestens zwei Leistungsstufen für den Betrieb der Gebläseeinheit direkt an der Gebläseeinrichtung aktivierbar sind. Vorstellbar wäre es, die Gebläseeinrichtung gleich mit einem eigenen Bedienmodul auszustatten. Dieses Bedienmodul könnte ein Display, insbesondere ein Touch-Display zum Ansteuern und/oder Überwachen eines Betriebs der Gebläseeinrichtung aufweisen.

Gemäß einer Ausführungsform könnte der Bediener die Gebläseeinrichtung mittels einer mobilen Einheit ansteuern, beispielsweise mittels eines Smart Device. Das Smart Device kann in Form eines Smartphones, Tablet PCs, Wearables und/oder einer Datenbrille ausgebildet sein.

Gemäß einer Ausführungsform der Erfindung ist die Gebläseeinrichtung für einen vernetzten Betrieb mit mindestens einem anderen an der Straßenbaumaschine angebrachten Anbaumodul, beispielsweise mit einem Thermographiemodul und/oder einem Wettermodul, konfiguriert. Insbesondere wäre es möglich, dass die Drehzahlregelung der Gebläseeinheit in Abhängigkeit mindestens eines an dem anderen Anbaumodul gemessenen Prozesswerts geschieht.

Ein Ansaugeffekt ließe sich mittels der Gebläseeinrichtung dadurch verbessern, dass die Gebläseeinheit eine Einströmdüse mit einem in Strömungsrichtung geringer werdenden Querschnitt umfasst. Diese Einströmdüse bewirkt eine Reduzierung von Verwirbelungen auf der Ansaugseite, sodass der Strömungsverlauf optimiert und Geräuschemissionen reduziert werden können. Die durch die Einströmdüse angesaugte Luft kann gezielt dem Radialventilator zugeführt werden und durch ihn weiter in Richtung Luftausgabeeinheit beschleunigt werden.

Hilfreich wäre es, wenn die Gebläseeinheit an einem daran ausgebildeten Gebläseeingang einen Filter aufweist. Dieser könnte beispielsweise in einer Düsenöffnung der Einströmdüse positioniert sein. Es wäre möglich, dass dem Filter ein Eingriffsschutz vorgelagert ist. Dieser kann auch vorliegen, wenn kein Filter an der Gebläseeinrichtung verbaut ist. Der Filter verhindert insbesondere eine Verschmutzung der Gebläseeinheit und sorgt ferner dafür, dass erzeugte die Luftbarriere eine verbesserte Luftqualität aufweist.

Gemäß einer Ausführungsform der Erfindung ist die Gebläseeinheit mit einer Stromversorgungsquelle der Straßenbaumaschine verbindbar. Denkbar wäre es, dass die Gebläseeinrichtung einen Netzstecker aufweist, der mit einer an der Straßenbaumaschine montierten Steckdose verbindbar ist, um die Gebläseeinheit mit Strom zu versorgen.

Vorzugsweise weist die Gebläseeinrichtung mindestens einen eigenen Akkumulator, beispielsweise einen Lithium-Ionen-Akkumulator, für einen Betrieb der Gebläseeinheit auf. In Sachen Stromversorgung ist die Gebläseeinrichtung somit vollständig autark ausgebildet. Eine Variante sieht vor, dass sich der Akkumulator mittels der Stromversorgungsquelle der Straßenbaumaschine aufladen lässt.

Ein Variante sieht vor, dass die Gebläseeinrichtung eine Luftlenkungseinheit umfasst, die als Strömungswandler den mittels der Gebläseeinheit gebildeten radialen Luftstrom axial in die Luftausgabeeinheit lenkt. Insbesondere ist die Luftlenkungseinheit dazu ausgebildet, einen mittels der Gebläseeinheit axial eingesaugten, radial verteilten Luftstrom in einen axialen Luftstrom, der 90° versetzt zum axialen Eingangsstrom ist, umzuwandeln und ihn in dieser Richtung in die Luftausgabeeinheit hinein zu lenken. Damit ist es möglich, eine hohe Verdichtung innerhalb der Luftausgabeeinheit zu erreichen, sodass die damit erzeugte Luftbarriere eine stabile laminare Strömung ausbildet, die nicht abreist, d.h. flächendeckend für Dämpfe undurchlässig ist. Somit lässt sich eine hohe Abschottungswirkung erreichen.

Vorzugsweise bildet die Luftlenkungseinheit ein Gehäuse für die Gebläseeinheit aus. Die Luftlenkungseinheit kann damit eine Doppelfunktion erfüllen, sprich außer der vorangehend beschriebenen Strömungswandlerfunktion auch noch eine Schutzfunktion für die Gebläseeinheit. Das an vorangehender Stelle beschriebene Bedienmodul der Gebläseeinrichtung könnte in einer von der Luftlenkungseinheit gebildeten Oberfläche integriert sein.

Vorteilhaft ist es, wenn die Luftlenkungseinheit, die Luftausgabeeinheit und/oder die Gebläseeinheit im Wesentlichen aus Kunststoff hergestellt sind. Dies kommt einer Leichtbauweise zugute. Insbesondere können die Luftlenkungseinheit und die Luftausgabeeinheit vollständig aus Kunststoff hergestellt sein, beispielsweise jeweils aus zwei Spritzgussschalen zusammengebaut sein. Die Gebläseeinheit kann außer der daran verbauten Elektronik ebenfalls vollständig aus Kunststoffteilen zusammengebaut sein.

Denkbar wäre es, dass die Luftlenkungseinheit aus mehreren Gehäuseteilen besteht, die im zusammengebauten Zustand eine Aufnahme zum Fixieren der darin aufgenommenen Gebläseeinheit ausbilden, damit diese darin eine vorbestimmte Ausrichtung einnimmt. Gemäß einer Variante sind die Gehäuseteile der Luftlenkungseinheit werkzeuglos zusammenbaubar, beispielsweise anhand von daran ausgebildeten Rastverschlüssen zusammengesteckt, wobei das Einrasten bewirkt, dass die darin aufgenommene Gebläseeinheit spielfrei fixiert ist, ohne dass dafür weitere Befestigungsmittel benötigt werden.

Insbesondere wäre es möglich, dass ein Verlängerungskabel der Gebläseeinheit, an dessen Ende der Netzstecker zum Verbinden der Gebläseeinrichtung mit der Stromversorgungsquelle der Straßenbaumaschine befestigt ist, am Umfang der Luftlenkungseinheit auf- und abwickelbar ist. Bei dieser Variante ließe sich die Luftlenkungseinheit auch als Kabeltrommel einsetzen.

Um nicht die Sicht des Bedieners der Straßenbaumaschine einzuschränken, wäre es vorteilhaft, wenn die Luftausgabeeinheit und/oder die Luftlenkungseinheit aus einem transparenten Kunststoff hergestellt sind.

Eine Variante sieht vor, dass die Gebläseeinrichtung mindestens eine Lichtquelle, beispielsweise mindestens eine darin integrierte LED aufweist. Insbesondere wäre es möglich, dass sich mittels der Lichtquelle die Luftausgabeeinheit und/oder die Luftlenkungseinheit zumindest teilweise ausleuchten lassen. Denkbar wäre es, dass zumindest ein Teil der an der Gebläseeinrichtung verbauten Komponenten als Strahler für Nachtarbeiten dienen kann.

Gemäß einer bevorzugten Ausführungsform ist die Luftausgabeeinheit und/oder die Luftlenkungseinheit in verschiedenen Farben beleuchtbar. Beispielsweise kann die Luftausgabeeinheit und/oder die Luftlenkungseinheit als Signalampel für einen Materialübergabeprozess genutzt werden. Mit Grün wird einem vorrausfahrenden Materiallieferfahrzeug, beispielsweise einem Beschickerfahrzeug oder einem LKW insbesondere angezeigt, dass ausreichend Einbaumaterial im Gutbunker vorrätig ist. Mit Rot wird insbesondere signalisiert, dass das Einbaumaterial im Gutbunker beinahe aufgebraucht ist, d.h. Nachschub nötig ist. Damit bildet die Gebläseeinrichtung ein multifunktionales Anbaumodul aus, das gleich mehrere Einsatzzwecke erfüllt. Anhand der Fähigkeit Farbsignale auszugeben, könnte auch einem vorausfahrenden Materiallieferfahrzeug signalisiert werden, ob es in einem gewünschten Abstand zur Straßenbaumaschine fährt.

Es wäre möglich, dass die Gebläseeinrichtung eine ggf. ausfahrbare Halterung aufweist, die dazu konfiguriert ist, die Gebläseeinrichtung in einem gewünschten Abstand zum Bedienstand, insbesondere seitlich beabstandet zu einem Tragholm eines Fahrerdachs, zu positionieren. Eine solche Halterung wäre insbesondere dann nützlich, wenn die Gebläseeinrichtung an kleineren Straßenbaumaschinen als Signalampel bzw. Einweiseampel für einen Materialübergabeprozess zum Einsatz kommt. Hiermit ließe sich die als Signalampel ausgebildete Gebläseeinrichtung mit einem ausreichenden Abstand seitlich des Fahrerdachs positionieren, damit sie vom Fahrer des Materiallieferfahrzeugs gut einsehbar ist.

Denkbar wäre es, dass die Luftausgabeeinheit mindestens eine in Form einer länglichen Fächerdüse oder in Form einer Flachdüse ausgebildete Austrittsdüse zum Erzeugen einer linearen Austrittsströmung als Luftbarriere umfasst. Damit kann eine durchgehend schnelle, laminare Austrittsströmung erzeugt werden, sodass sich eine wirksame Luftbarriere für den Bediener bildet. Die Austrittsdüse kann als Flachdüse bzw. als Langdüse einen dünnen, flach ausgebildeten laminaren Luftstrahl, sprich eine dünne Luftwand bilden, die als Luftbarriere einen Bereich, der Dämpfen ausgesetzt ist, von einem Bereich, in welchem der Bediener der Straßenbaumaschine positioniert ist, wirksam abschottet.

Vorzugsweise weist die als Flachdüse gebildete Austrittsdüse einen länglichen, röhrenartigen Körper auf, dessen Geometrie, insbesondere dessen Länge, Durchmesser und/oder Umfang hinsichtlich der Größe eines Aufbauteils des Bedienstands gewählt ist, beispielsweise in etwa der Größe eines zum Tragen des Dachs des Bedienstands eingesetzten Rahmenteils entspricht. Beispielsweise kann die als Flachdüse gebaute Austrittsdüse eine Länge haben, die im Wesentlichen der Länge eines am Bedienstand der Straßenbaumaschine gelagerten Frontrahmens entspricht.

Gemäß einer Ausführungsform weist die Luftausgabeeinheit, insbesondere deren Austrittsdüse, zumindest abschnittsweise einen röhrenförmig-runden, einen röhrenförmig-quadratischen oder einen röhrenförmig-ovalen Körper auf, d.h. einen länglichen Rohrkörper, dessen Rohrquerschnitt verschiedene Geometrien haben kann.

Die Luftausgabeeinheit, insbesondere die daran als Flachdüse ausgebildete Austrittsdüse, kann wie gesagt aus Kunststoff hergestellt sein. Dies führt zu einem leichten Aufbau. Vorzugsweise ist die Luftausgabeeinheit aus mehreren (Kunststoff-)Schalenteilen zusammengebaut. Damit kann sie für Service- und/oder Reinigungsprozesse einfach auseinandergebaut werden.

Insbesondere ist die Luftausgabeeinheit zum Anpassen einer Ausrichtung der von ihr erzeugten Luftbarriere gelenkig, beispielsweise verdrehbar relativ zur Gebläseeinheit gelagert. Hierfür kann die Luftausgabeeinheit mittels eines Radiallagers an einem Ausgang der Luftlenkungseinheit befestigt sein. Das Radiallager kann durch ein Drehgelenk gebildet sein, welches für eine stufenlose Verstellung ausgebildet sein. Alternativ dazu wäre es möglich, dass sich die Luftausgabeeinheit in mehreren vorbestimmten Winkeln am Ausgang der Luftlenkungseinheit befestigen lässt. Beispielsweise kann die Luftausgabeeinheit als rohrförmiger Aufsatz am Ausgang der Luftlenkungseinheit in verschiedenen Einstellwinkeln aufgesteckt werden, um eine dementsprechende Ausrichtung der Austrittsdüse festzulegen.

Eine für die Praxis besonders nützliche Variante ist dadurch gegeben, dass die Luftausgabeeinheit zum Variieren einer Fläche der von ihr erzeugten Luftbarriere teleskopierbar ausgebildet ist. Damit lässt sich die Gebläseeinrichtung noch besser an verschieden groß ausgebildeten Bedienstandaufbauten einsetzen. Beispielsweise könnte diese teleskopierbar ausgebildete Luftausgabeeinheit zwei zueinander verschiebbare Rohrabschnitte aufweisen, um die Fläche der Luftbarriere zu variieren.

Insbesondere könnte die Gebläseeinrichtung mindestens ein Befestigungsmittel aufweisen, anhand dessen sich die Gebläseeinrichtung an einem Tragholm des Bedienstands, beispielsweise an einem Frontrahmen oder an einem Heckrahmen, befestigen lässt. Das Befestigungsmittel kann derart ausgebildet sein, dass es eine Verschlusswirkung erzeugt, womit sich die Luftausgabeeinheit automatisch in eine vorbestimmte Ausrichtung bringen lässt, beispielsweise entlang des Tragholms verläuft. Als Befestigungsmittel kommen sowohl kraft- als auch formschlüssige Verbindungen in Frage.

Eine kompakte Bauweise käme insbesondere dann zustande, wenn an der Straßenbaumaschine ein Tragholm des Bedienstands, beispielsweise ein Frontrahmen des Fahrerdachs, eine Schwenkkonsole des Fahrersitzes, eine Sitzkonsole des Fahrersitzes oder ein Rahmenteil des Außenbedienstands, selbst die Luftausgabeeinheit ausbildet. Bei dieser integralen Bauweise benutzt die Gebläseeinrichtung eine bereits am Bedienstand der Straßenbaumaschine vorhandene Komponente als Luftausgabeeinheit. Dafür könnte an einer solchen Komponente, beispielsweise am Tragholm des Fahrerdachs, an der Schwenkkonsole des Fahrersitzes, an der Sitzkonsole des Fahrersitzes oder an einem Rahmenteil des Außenbedienstands, mindestens ein Anschluss ausgebildet sein, an welchem sich die Gebläseeinheit, insbesondere die dafür vorgesehene Luftlenkungseinheit, lösbar anbringen lässt, wobei die Komponente selbst als Fächerdüse oder Flachdüse konfiguriert ist, d.h. eine längliche Austrittsöffnung zum Ausbilden der Luftbarriere aufweist.

Gemäß einer Variante kann die Gebläseeinrichtung am Fahrerbedienstand an einer daran ausgebildeten Bedienpultführung, welche eine Verlagerung eines Fahrerbedienpults quer zur Fahrtrichtung der Straßenbaumaschine ermöglicht, derart befestigt sein, dass die daraus ausströmende Luftbarriere am Fahrerbedienstand eine Frontscheibe aus Luft bildet. Dieser Einsatz kommt vor allem für Fahrerbedienstände ohne physische Frontscheibe aus Glas oder einem ähnlichen Scheibenmaterial in Frage.

Gemäß einer Ausführungsform der Erfindung umfasst die Luftausgabeeinheit mindestens eine Austrittsdüse, die zum Erzeugen einer radialen Austrittsströmung als Luftbarriere konfiguriert ist. Insbesondere kann die damit erzeugte Luftströmung in einem Umfang von 360° erzeugt werden, wodurch sich am Bedienstand eine besonders groß ausgebildete Luftwand für den Bediener ausbildet lässt, um ihn vor beim Einbaubetrieb entstehenden Dämpfen zu schützen. Zum Erreichen dieser vorteilhalten Abschottungswirkung ist es dennoch möglich, dass die Luftausgabeeinheit selbst in kompakter Bauweise vorliegt.

Gemäß einer zweckmäßigen Bauweise ist die Luftausgabeeinheit aus zwei (tellerförmigen) Schalenteilen zusammengebaut, die im zusammengebauten Zustand an deren Umfang einen Spalt als umlaufende Austrittsöffnung definieren. Damit lässt sich eine Luftbarriere eine Luftwand aus einer radialen Luftströmung bilden. Vorstellbar wäre es, dass die Austrittsöffnung nicht komplett umlaufend, sondern lediglich entlang eines Abschnitts des Umfangs ausgebildet ist. Die Austrittsöffnung könnte z.B. gemäß einem Kreissegment, insbesondere gemäß einem Halbkreisbogen ausgebildet sein.

Eine vorteilhafte Variante sieht vor, dass die zwischen den tellerförmigen Schalenteilen gebildete Austrittsöffnung zumindest teilweise stufenlos oder segmentweise verschließbar ist. Damit ist es möglich, die Austrittsrichtung sowie die Fläche der als Luftbarriere erzeugten Luftströmung zu variieren.

Insbesondere ist die Gebläseeinheit als Radialventilator zwischen den beiden tellerförmigen Schalenteilen angeordnet sein. Die tellerförmigen Schalenteile können somit auch als Gehäuse der Gebläseeinheit verwendet werden. Hierbei kann der mittels des Radialventilators gebildete axiale Eingangsstrom durch eine in einem der beiden Schalenteile gebildete Öffnung, die insbesondere einen sich in Strömungsrichtung verjüngenden Querschnitt aufweist, angesaugt und in radialer Richtung zur Austrittsöffnung geleitet werden.

Die zusammengebauten tellerförmigen Schalenteile schließen insbesondere einen in radialer Richtung enger werdenden Luftraum ein. Damit bilden die zusammengebauten tellerförmigen Schalenteile eine Düse zum Bilden der radialen Luftströmung aus. Bei dieser Variante kann auf eine zusätzliche Luftlenkungseinheit verzichtet werden. Die Gebläseeinrichtung liegt somit im Wesentlichen als scheibenförmiges Anbaugerät vor, das in dieser Form wenig Platz zur Anbringung beansprucht.

Denkbar wäre es, dass die tellerförmigen Schalenteile innerhalb des Luftraums Strömungskanäle ausbilden, um die mittels des Radialventilator gebildete radiale Luftströmung gezielt zur Austrittsöffnung zu führen. Dies unterstützt das Ausbilden einer radialen Luftbarriere. Die tellerförmigen Schalenteile können für eine leichte Bauweise aus Kunststoff hergestellt sein. Um den Einfluss auf Sichtverhältnisse des Bedieners zu reduzieren, sind die tellerförmigen Schalenteile insbesondere aus einem transparenten Kunststoff hergestellt.

Gemäß einer Variante der Erfindung ist die Gebläseeinrichtung für einen werkzeuglosen An- und Abbau konfiguriert. Beispielsweise kann die Gebläseeinrichtung mittels einer daran ausgebildeten Schnellverschlusshalterung, die beispielsweise als Kniehebel-, Bajonett- oder Magnetverschluss vorliegt, einfach per Hand an einem Tragholm oder Rahmenteil der Straßenbaumaschine befestigt werden.

Insbesondere ist die Gebläseeinrichtung zum Erzeugen einer Luftaustrittsgeschwindigkeit zwischen 20 m/s und 30 m/s ausgebildet. Dadurch lässt sich eine Luftbarriere mit einer ausreichenden Abschottungswirkung erzeugen. Denkbar wären jedoch auch Luftaustrittsgeschwindigkeiten außerhalb dieses Bereichs. Die Gebläseeinrichtung kann insbesondere an einem Frontrahmen eines Dachaufbaus des Fahrerbedienstands der Straßenbaumaschine befestigt sein. Vorstellbar wäre es, dass am Frontrahmen gleich mehrere Gebläseeinrichtungen gemäß der Erfindung befestigt sind, um parallele Luftbarrieren auszubilden.

Insbesondere kann die Gebläseeinrichtung derart befestigt sein, dass sich deren Luftausgabeeinheit in Form eines Rohrs zumindest abschnittsweise, insbesondere aber komplett entlang des Frontrahmens erstreckt. In dieser Weise könnte die Gebläseeinrichtung auch an einem Heckrahmen des Bedienstands montiert sein, um entweder nach vorne in Fahrtrichtung seitlich des Bedienstands eine Luftwand oder hinter dem Bedienstand quer zur Fahrtrichtung eine Luftwand zu erzeugen. Mittels der zuletzt genannten Luftwand ließen sich Dämpfe aus dem Schneckenraum abschotten.

Als weiterer Anbringungsort der erfindungsgemäßen Gebläseeinrichtung käme eine Schwenkkonsole für einen Fahrersitz des Bedienstands der Straßenbaumaschine in Frage. Die Strömungsrichtung der Luftbarriere hängt damit von der Einstellung der Schwenkkonsole ab. Im eingeschwenkten Zustand ist die laminare Luftströmung quer zur Fahrtrichtung der Straßenbaumaschine gerichtet, womit sich gleichzeitige Dämpfe vom Bedienstand seitwärts wegblasen lassen.

Im ausgeschwenkten Zustand ist die laminare Luftströmung mehr in Richtung des Gutbunkers ausgerichtet, sodass aus diesem Bereich kommende Dämpfe besser abgeblockt werden können. Vorstellbar wäre eine Straßenbaumaschine mit mindestens einer daran montierten Gebläseeinrichtung, wobei die Gebläseeinrichtung am Bedienstand, an einem daran ausgebildeten Frontrahmen eines Dachaufbaus, an einer Schwenkkonsole für einen Fahrersitz, an einer Sitzkonsole des Fahrersitzes oder an einem Rahmenteil eines Außenbedienstands der Straßenbaumaschine befestigt ist, und wobei der Frontrahmen, die Schwenkkonsole , die Sitzkonsole oder das Rahmenteil die Luftausgabeeinheit der Gebläseeinrichtung ausbildet, woran die Gebläseeinheit lösbar angebracht ist.

Denkbar wäre es, dass die Gebläseeinrichtung an der Straßenbaumaschine an einem Rausfallschutz des Fahrersitzes des Bedienstands befestigt ist. Für diesen Anbringungsort eignet sich insbesondere die Luftausgabeeinheit, die zum Erzeugen der radialen Luftströmung als Luftbarriere ausgebildet ist, sprich die als tellerförmiges Anbaumodul vorliegt.

Die Gebläseeinrichtung ist erfindungsgemäß derart am Bedienstand der Straßenbaumaschine montiert, dass aus einem innenliegenden Bereich des Bedienstands Luft absaugbar ist. Es ist insbesondere möglich, dass die Luftausgabeeinheit derart am Bedienstand ausgerichtet ist, dass mittels der von ihr erzeugten Luftbarriere ein Unterdruck im innenliegenden Bereich, d.h. innerhalb des Bedienstands erzeugbar ist. Damit kann eine Sogwirkung innerhalb des Bedienstands zum Absaugen der darin vorliegenden Atmosphäre erzeugt werden, wodurch eine Verbesserung der Luftqualität innerhalb des Bedienstands erreichbar ist.

Vor allem wäre es in diesem Zusammenhang denkbar, dass die Luftausgabeeinheit einer an der Schwenkkonsole befestigten Gebläseeinrichtung zum Absaugen von Luft im Bodenbereich der Bedienplattform eingesetzt wird. Die Luft aus dem Bodenbereich lässt sich dabei mittels des Unterdrucks über die Luftausgabeeinheit, sprich entlang deren Oberfläche, in die laminare Luftströmung zum Ausbilden der Luftbarriere hineinziehen und kann zusammen mit dieser vom Bedienstand weggelassen werden.

Die Erfindung betrifft ferner eine Verwendung gemäß Anspruch 13, d.h. die Verwendung einer als modulares Anbaugerät konfigurierten Gebläseeinrichtung zur lösbaren Anbringung an einer Straßenbaumaschine zum Erzeugen einer Luftbarriere, mittels welcher während des Betriebs der Straßenbaumaschine entstehende Dämpfe von einem Bediener ferngehalten werden. Die erfindungsgemäße Gebläseeinrichtung kann als eigenständige Funktionseinheit, sprich autarkes Anbaumodul an der Straßenbaumaschine eingesetzt werden, die im Grunde genommen unabhängig von anderen Gebläse- beziehungsweise Ansaugaggregaten der Straßenbaumaschine, sofern diese vorhanden sind, funktioniert, um vom Bediener wirksam Dämpfe fernzuhalten.

Vorstellbar wäre es, dass die modulartige Gebläseeinrichtung im angebauten Zustand an der Straßenbaumaschine außer ihrer eigentlichen Gebläsefunktion auch noch als Leuchtmittel, insbesondere für einen Materialübergabeprozess, eingesetzt wird.

Ausführungsformen der Erfindung werden anhand der folgenden Figurenbeispiele genauer erläutert. Es zeigen:
- Figur 1: eine als Straßenfertiger konfigurierte Straßenbaumaschine ohne Gebläseeinrichtung,
- Figur 2: die als Straßenfertiger konfigurierte Straßenbaumaschine aus Figur 1 mit einer daran montierten Gebläseeinrichtung,
- Figur 3: die als Straßenfertiger konfigurierte Straßenbaumaschine aus Figur 1 mit mehreren daran montierten Gebläseeinrichtungen,
- Figur 4: eine Gebläseeinrichtung in isolierter Darstellung
- Figur 5: die Gebläseeinrichtung aus Figur 4 mit ausgezogener Luftausgabeeinheit,
- Figur 6A: eine separat gezeigte Luftausgabeeinheit in eingefahrener Stellung,
- Figur 6B: die Luftausgabeeinheit aus Figur 6A in ausgezogener Stellung,
- Figur 6C: ein Querschnitt durch die Luftausgabeeinheit aus Figur 6A,
- Figur 7: eine Gebläseeinheit der Gebläseeinrichtung in isolierter Darstellung,
- Figur 8: eine Luftlenkungseinheit für die Gebläseeinheit,
- Figur 9: eine Einströmdüse der Gebläseeinrichtung,
- Figur 10: eine als Straßenfertiger konfigurierte Straßenbaumaschine mit einer Gebläseeinrichtung zum Erzeugen eines radialen Luftstroms als Luftbarriere,
- Figur 11: die als Straßenfertiger konfigurierte Straßenbaumaschine aus Figur 10 in perspektivischer Darstellung ohne Dachaufbau,
- Figur 12: die am Straßenfertiger aus Figur 10 eingesetzte Gebläseeinrichtung in isolierter Schnittdarstellung, und
- Figur 13: eine perspektivische Darstellung einer als Beschickerfahrzeug konfigurierten Straßenbaumaschine.

Gleiche technische Komponenten sind in den Figuren durchgängig mit denselben Bezugszeichen versehen.

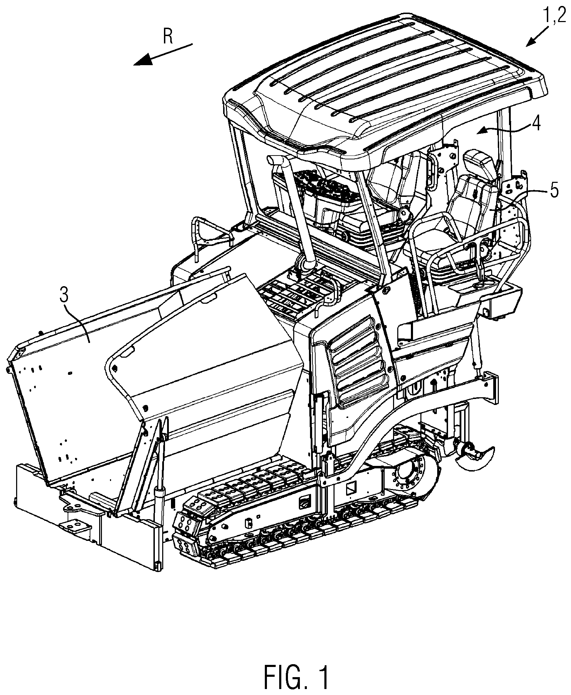

Figur 1 zeigt eine Straßenbaumaschine 1, die als Straßenfertiger 2 vorliegt. Der Straßenfertiger 2 verfügt über einen Gutbunker 3, in welchem bituminöses Einbaumaterial bevorratet werden kann, das mittels einer in Figur 1 nicht gezeigten Längsfördereinrichtung aus dem Gutbunker 3 heraus, entgegen der Fahrtrichtung R zu einer ferner nicht gezeigten, vom Straßenfertiger 2 geschleppten Einbaubohle transportiert wird und von dieser zu einem neuen Straßenbelag verarbeitet wird.

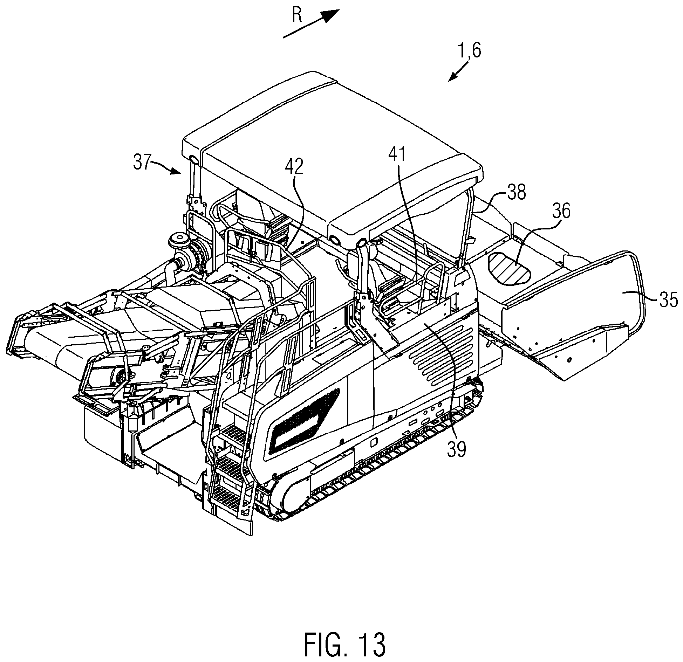

Der Straßenfertiger 2 umfasst einen Bedienstand 4, auf welchem ein Fahrersitz 5 positioniert ist. Insbesondere bei einem Materialübergabeprozess, bei welchem Einbaugut in den Gutbunker 3, beispielsweise mittels eines Beschickerfahrzeugs 6 (siehe Figur 13) oder mittels eines LKWs gefördert wird, steigen aus dem Gutbunker 3 Dämpfe auf, die in den Bedienstand 4 ziehen können. Vor allen Dingen hat es sich gezeigt, dass im aufgeklappten Zustand des Gutbunkers 3 über die außenliegenden Seiten des Bedienstands 4 Dämpfe bis zum auf dem Fahrersitz 5 positionierten Bediener vordringen können.

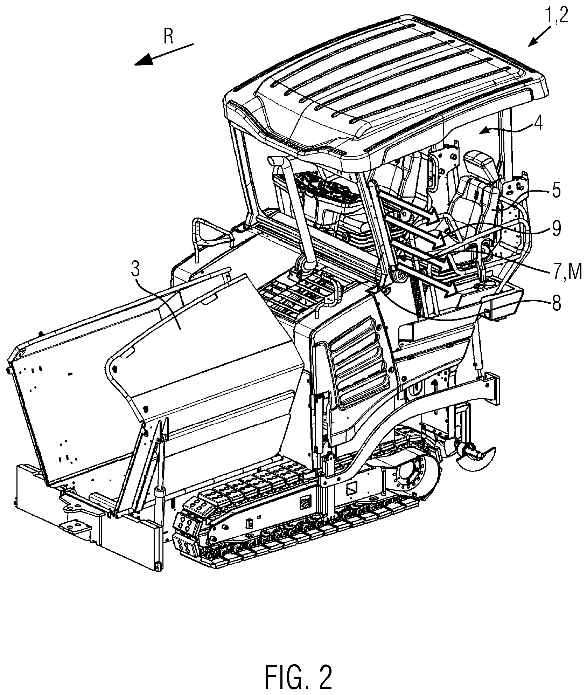

Um diese Dämpfe vom Bediener fernzuhalten, ist gemäß Figur 2 am Straßenfertiger 2 eine Gebläseeinrichtung 7 angeordnet. Die Gebläseeinrichtung 7 ist als gesondertes Anbaugerät M konfiguriert und an einem Frontrahmen 8 des Bedienstands 4 befestigt. Gemäß Figur 2 wird mittels der Gebläseeinrichtung 7 eine quer zur Fahrtrichtung R des Straßenfertigers 2 ausgerichtete Luftbarriere 9 anhand eines laminar aus der Gebläseeinrichtung 7 austretenden Luftstroms gebildet. Damit kann der auf dem Fahrersitz 5 positionierte Bediener wirksam vor seitlich des Straßenfertigers 2 aufsteigenden Dämpfen abgeschirmt werden, wobei die dadurch erzeugte Luftbarriere 9 gleichzeitig die sie erreichenden Dämpfe quer zur Fahrtrichtung R, d.h. weg vom Bediener bläst.

Die in Figur 2 gezeigte Gebläseeinrichtung 7 liegt als autarkes, modulares Anbaugerät M für den Straßenfertiger 2 vor. Die Gebläseeinrichtung 7 lässt sich auf einfache Art und Weise am Frontrahmen 8 des Straßenfertigers 2 befestigen und kann, wie in Figur 2 gezeigt, in kompakter Weise entlang des Frontrahmens 8 ausgerichtet sein, sodass die Sichtverhältnisse des Fahrers nicht eingeschränkt werden.

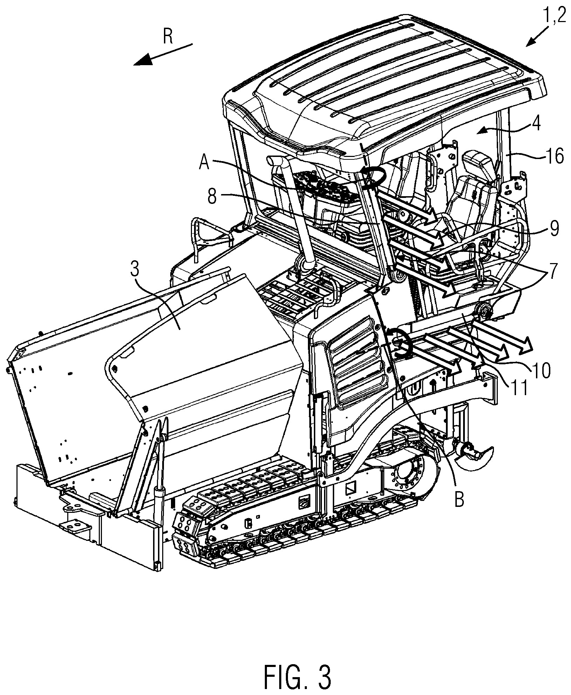

Des Weiteren deutet Figur 3 darauf hin, dass die Gebläseeinrichtung 7 hinsichtlich einer Achse A, die im Wesentlichen in Richtung längs des Frontrahmens 8 verläuft, verdrehbar ist. Dadurch ist es möglich, eine Ausbreitungsrichtung der Luftbarriere 9 relativ zum Bedienstand 4 anzupassen.

Figur 3 zeigt den Straßenfertiger 2 aus Figur 1 mit zwei daran befestigten Gebläseeinrichtungen 7. Eine davon ist gemäß Figur 2 am Frontrahmen 8 befestigt. Die andere Gebläseeinrichtung 7 ist an einer Schwenkkonsole 10 montiert, auf welcher der Fahrersitz 5 gelagert ist. Anhand dieser Gebläseeinrichtung 7 lässt sich eine im Wesentlichen horizontale Luftbarriere 11 neben dem Fahrersitz 5 erzeugen, die wie ein Teppich aufsteigende Dämpfe seitlich des Straßenfertigers 2 bedeckt.

An der Schwenkkonsole 10 befestigt ist die Gebläseeinrichtung 7 hinsichtlich einer Achse B, die im Wesentlichen in Fahrtrichtung R verläuft, verdrehbar, um die Ausbreitungsrichtung der Luftbarriere 11 relativ zum Bedienstand 4 anpassen zu können. Beispielsweise ließe sich die Gebläseeinrichtung 7 derart verstellen, dass die Luftbarriere 11 schräg nach oben gerichtet ist, damit seitlich neben dem Straßenfertiger 2 arbeitendes Baustellenpersonal nicht angeblasen wird.

Gemäß der in Figur 3 eingestellten Luftbarrieren 9, 11 lässt sich eine wirksame Luftabschirmung des Fahrersitzes 5 einrichten. Die beiden Luftbarrieren 9, 11 bilden eine seitlich des Bedienstands 4 positionierte Luftumwandung aus. Insbesondere können die jeweiligen Luftbarrieren 9, 11 sie erreichenden Dämpfe vom Bediener abschirmen und diese vom Bediener wegleiten.

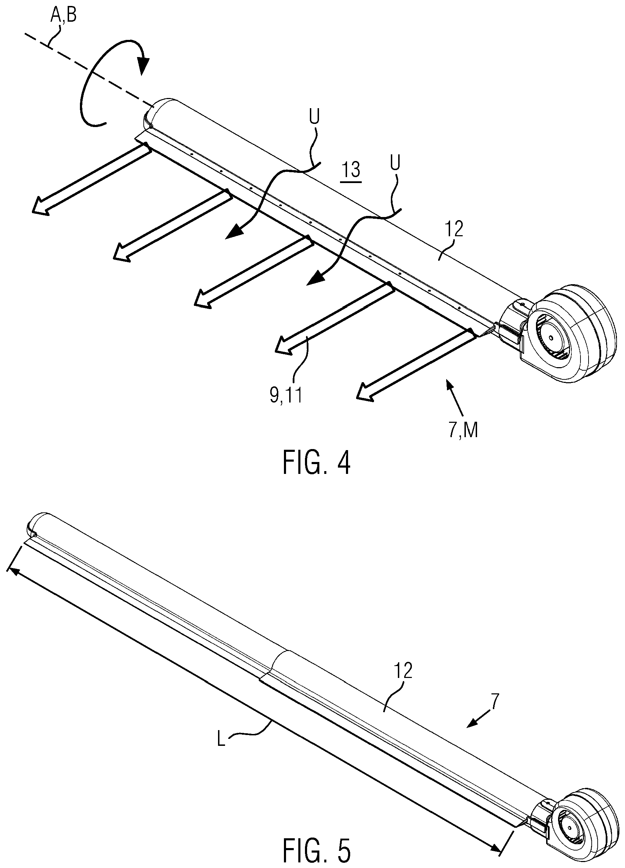

Figur 4 zeigt die als Anbaugerät M konfigurierte Gebläseeinrichtung 7 in isolierter Darstellung. Als derartiges Modul kann die Gebläseeinrichtung 7 an verschiedenen Baumaschinentypen eingesetzt werden. Die Gebläseeinrichtung 7 weist eine Luftausgabeeinheit 12 auf, die eine röhrenartige Form hat und als Flachdüse vorliegt, entsprechend deren Länge die Luftbarrieren 9, 11 erzeugbar sind.

Ferner deutet Figur 4 schematisch darauf hin, dass mittels eines durch die Luftbarriere 9, 11 resultierenden Unterdrucks U in einem Bereich 13, der auf einer zur Luftbarriere 9, 11 abgewandten Seite der Luftausgabeeinheit 12 vorliegt, eine im Bereich 13 vorliegende Atmosphäre absaugbar ist. Die Luft aus dem Bereich 13, beispielsweise aus dem Bodenbereich des Bedienstands 4, wird durch den vorherrschenden Unterdruck U in die Strömung der Luftbarriere 9, 11 einbezogen. Die lineare, aus der Luftausgabeeinheit 12 austretende Luftströmung bildet somit eine Sogwirkung im Bereich 13 aus, sodass aus diesem Atmosphäre absaugbar ist, d.h. auch darin ggf. angesammelte Dämpfe.

Weiter wird die Luft aus dem Bereich 13, ebenfalls über die Gebläseeinrichtung 7 in die Luftströmung zum Ausbilden der Luftbarriere 9, 11 hineingezogen und kann zusammen mit dieser vom Bedienstand 4 wegströmen.

Im Hinblick auf Figur 3 wäre es damit möglich, die Gebläseeinrichtung 7, welche am Frontrahmen 8 befestigt ist, zum Absaugen einer Atmosphäre aus dem dahinter, innerhalb des Bedienstands 4 liegenden Bereich 13 einzusetzen. Ebenso gut ließe sich die Gebläseeinrichtung 7, die an der Schwenkkonsole 10 des Straßenfertigers 2 befestigt ist, dafür einsetzen, um aus dem Bodenbereich des Bedienstands 4 Atmosphäre abzusaugen. Damit können die Gebläseeinrichtungen 7 für eine zusätzliche Verbesserung der Luftqualität innerhalb des Bedienstands 4 des Straßenfertigers 2 sorgen. Die Saugleistung mittels der Gebläseeinrichtung 7 kann entsprechend einer Leistung der Gebläseeinrichtung 7 zum Erzeugen der Luftbarrieren 9, 11 angepasst werden.

Figur 5 zeigt die Gebläseeinrichtung 7 mit der daran montierten Luftausgabeeinheit 12 in einer ausgezogenen Stellung. Gemäß Figur 5 ist die Luftausgabeeinheit 12 teleskopierbar konfiguriert. Eine Länge L der Luftausgabeeinheit 12 ist damit variierbar. Damit ist es möglich, die Länge L der Luftausgabeeinheit 12 an eine Länge des Frontrahmens 8 beziehungsweise an eine Länge der Schwenkkonsole 10 anzupassen, um an verschiedenen Straßenfertiger- sowie Beschickerfahrzeugtypen, an deren konstruktive Ausgestaltung angepasst, eingesetzt zu werden.

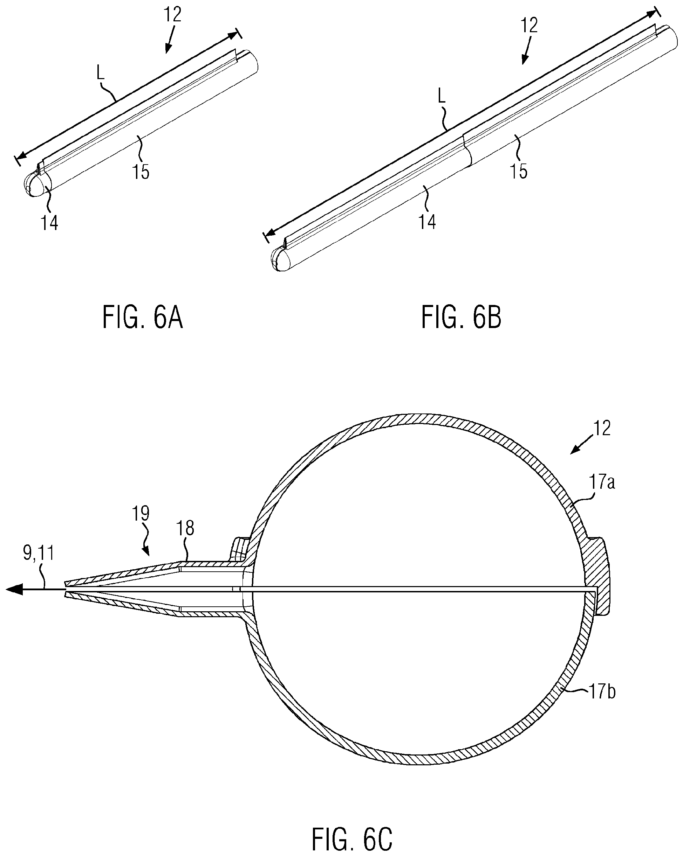

Figur 6A zeigt die Luftausgabeeinheit 12 in isolierter Darstellung. Die Luftausgabeeinheit 12 ist in Figur 6A in einer eingezogenen Stellung, in welcher ein innenliegender Rohrabschnitt 14 in einen außenliegenden Rohrabschnitt 15 eingeschoben ist. Damit ist die Luftausgabeeinheit 12 insgesamt kurz ausgebildet und lässt sich auch hervorragend an Rahmenteilen mit kurzer Länge befestigen, beispielsweise am Heckrahmen 16 des Bedienstandes 4 (siehe Figur 3).

Figur 6B zeigt die Luftausgabeeinheit 12 in einer ausgezogenen Stellung. In der ausgezogenen Stellung weist die Luftausgabeeinheit 12 eine maximale Länge L auf. Mit dieser Länge L ließe sich eine besonders große Luftbarriere 9, 11 mittels der Gebläseeinrichtung 7 erzeugen.

Die in den Figuren 6A und 6B gezeigte teleskopierbare Luftausgabeeinheit 12 kann an verschieden groß ausgebildeten Straßenbaumaschinen 1 eingesetzt werden, insbesondere an einem Straßenfertiger 2 der Kompaktklasse.

Figur 6C zeigt die Luftausgabeeinheit 12 im Querschnitt. Die Luftausgabeeinheit 12 weist gemäß Figur 6C einen im Wesentlichen rund ausgebildeten Querschnitt auf. Dieser Querschnitt könnte auch eine andere Geometrie aufweisen, beispielsweise quadratisch, oval o.ä. ausgebildet sein. Die Luftausgabeeinheit 12 ist aus zwei Schalenteilen 17a, 17b zusammengebaut. Die beiden Schalenteile 17a, 17b können aus Kunststoff hergestellt sein. Im zusammengebauten Zustand bilden die beiden Schalenteile 17a, 17b eine in Form einer Flachdüse 18 ausgebildete Austrittsdüse 19 aus. Aus der Austrittsdüse 19 strömt in linearer Richtung die zum Ausbilden der Luftbarriere 9, 11 beschleunigte Luft.

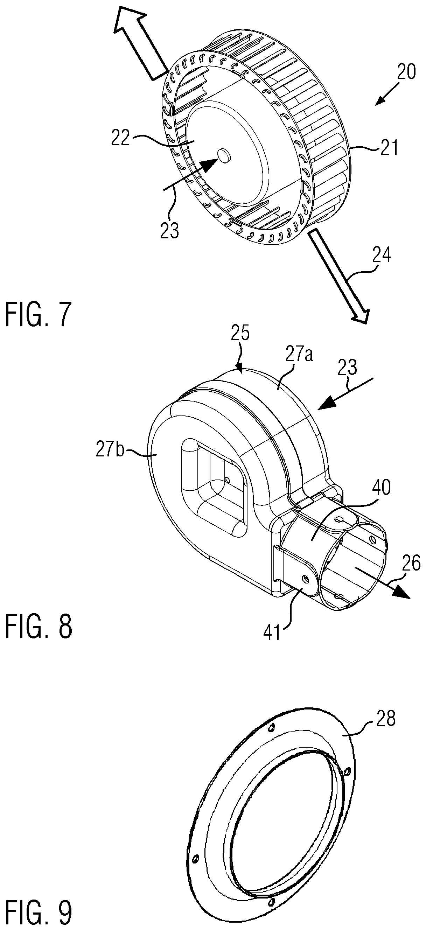

Figur 7 zeigt eine Gebläseeinheit 20. Die Gebläseeinheit 20 liegt als Radialventilator vor. Die Gebläseeinheit 20 verfügt über ein Lüfterrad 21 und einen Elektromotor 22 als Antrieb für das Lüfterrad 21. Indem das Lüfterrad 21 in Rotation versetzt wird, bildet sich ein axialer Ansaugstrom bzw. Eingangsstrom 23 in Richtung des Lüfterrads 21. Der axiale Ansaugstrom 23 wird mittels des Lüfterrads 21 in einen radialen Luftstrom 24 umgewandelt. Das Lüfterrad 21 kann aus Kunststoff hergestellt sein.

Figur 8 zeigt eine Luftlenkungseinheit 25 in isolierter Darstellung. Die Luftlenkungseinheit 25 liegt als Gehäuse für die in Figur 7 gezeigte Gebläseeinheit 20 vor. Die Gebläseeinheit 20 kann derart in der Luftlenkungseinheit 25 eingebaut sein, dass der in Figur 7 gezeigte, von der Gebläseeinheit 20 erzeugte radiale Luftstrom 24 mittels der Luftlenkungseinheit 25 in einen erneut axial gebildeten Luftstrom 26 umgewandelt wird. Die Luftlenkungseinheit 25 bildet damit zusammen mit der darin aufgenommenen Gebläseeinheit 20 eine Einheit aus, um Luft aus der Umgebung der Luftlenkungseinheit 25 axial anzusaugen und diese im Wesentlichen senkrecht zur Ansaugung wieder abzugeben.

Wie die Luftausgabeeinheit 12 kann auch die Luftlenkungseinheit 25 aus Kunststoff hergestellt sein, insbesondere aus zwei Schalenteilen 27a, 27b zusammengebaut sein. Die Luftlenkungseinheit 25 kann sogar aus einem transparenten Kunststoff ausgebildet sein.

Weiter zeigt Figur 7, dass die Luftlenkungseinheit 25 einen Rohrabschnitt 40 aufweist. Dieser dient zur Befestigung der Luftausgabeeinheit 12. Vor allem zeigt Figur 7, dass der Rohrabschnitt 40 Befestigungserhebungen 41 ausbildet, mittels welcher die Luftausgabeeinheit 12 in verschiedenen Ausrichtungen hinsichtlich der Achse A, B verdreht befestigbar ist.

Figur 9 zeigt eine Einströmdüse 28. Die Einströmdüse 28 ist im zusammengebauten Zustand der Gebläseeinrichtung 7 am Eingang der Luftlenkungseinheit 25 positioniert, um den Ansaugstrom 23 zu optimieren und die Geräuschemission zu minimieren.

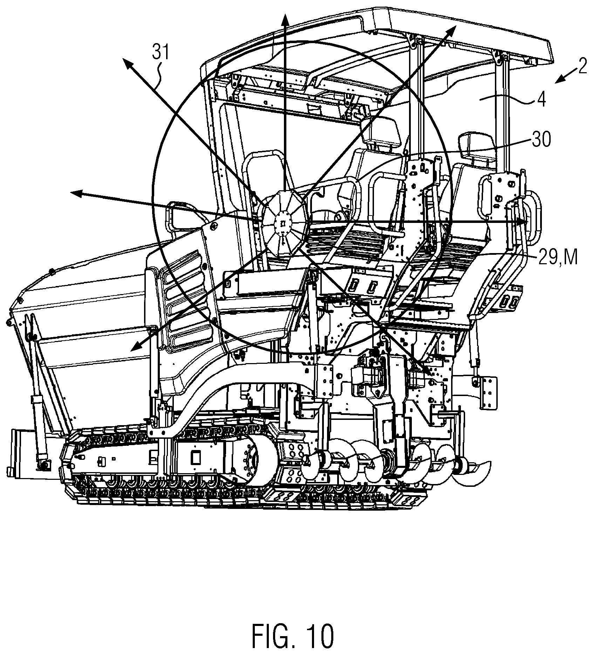

Figur 10 zeigt den Straßenfertiger 2 mit einer weiteren als Anbaugerät M konfigurierten Gebläseeinrichtung 29, die an einem Rausfallschutz 30 des Bedienstands 4 angebracht ist. Die Gebläseeinrichtung 29 ist dazu ausgebildet, eine radiale Luftströmung als Luftbarriere 31 zu erzeugen, die sich seitlich des Bedienstands 4 in radialer Richtung ausbreitet. Die Gebläseeinrichtung 29 kann auch auf beiden Seiten des Bedienstands 4 zum Einsatz kommen.

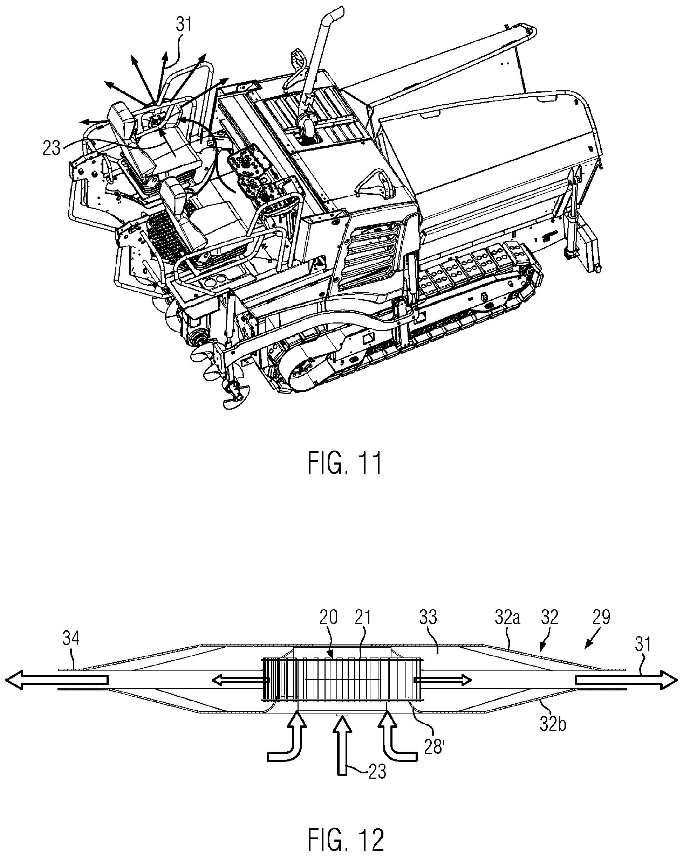

Figur 11 zeigt den Straßenfertiger 2 aus Figur 10 ohne Dachaufbau. Figur 11 zeigt, dass die am Rausfallschutz 30 befestigte Gebläseeinrichtung 29 dazu konfiguriert ist, direkt aus dem Bedienstand 4 Luft abzusaugen und diese radial zum Ausbilden der Luftbarriere 31 entlang der offenen Seite des Bedienstands zu verteilen. Die in der Gebläseeinrichtung 29 eingesetzte Gebläseeinheit 20 kann dabei besonders wirksam Atmosphäre aus dem Bedienstand 4 seitlich des Fahrersitzes 5 absaugen.

Figur 12 zeigt die Gebläseeinrichtung 29 im Querschnitt in isolierter Darstellung. Die Gebläseeinrichtung 29 umfasst zwei tellerförmige Schaltenteile 32a, 32b, die zusammengebaut eine Luftausgabeeinheit 32 ergeben, die gleichzeitig als Gehäuse für die Gebläseeinheit 20 vorliegt. Im zusammengebauten Zustand schließen die beiden Schalenteile 32a, 32b einen Luftraum 33 ein, in welchem die Gebläseeinheit 20 aufgenommen ist. Die mittels der Gebläseeinheit 20 erzeugte, axiale Eingangsströmung 23 wird mittels des Lüfterrads 21 in radialer Richtung umgelenkt und nach außen beschleunigt, um mittels der dadurch erzeugten linearen Luftströmung die Luftbarriere 31 auszubilden.

Figur 12 zeigt, dass die beiden Gehäusehälften 32a, 32b umfangseitig eine Austrittsöffnung 34 ausbilden. Ferner zeigt Figur 12, dass die Gehäusehälfte 32b am Eingang der Gebläseeinheit 20 eine Einströmdüse 28' in Gestalt der Einströmdüse 28 aus Figur 9 ausbildet. Zur Erzeugung einer wirksamen Luftbarriere 31 ist es zweckmäßig, dass der zwischen den Schalenteilen 32a, 32b gebildete Luftraum 33 von der Gebläseeinheit 20 hin zur Austrittsöffnung 34 enger wird, wodurch sich ein ausreichendender Düseneffekt ergibt.

Figur 13 zeigt eine als Beschickerfahrzeug 6 konfigurierte Straßenbaumaschine 1. Das Beschickerfahrzeug 6 aus Figur 13 weist einen Gutbunker 35 auf, der zur Aufnahme eines Einbaumaterials 36 konfiguriert ist. Ein Bedienstand 37 des Beschickerfahrzeugs 6 ist im Wesentlichen wie der Bedienstand 4 des Straßenfertigers 2 aufgebaut. Die Gebläseeinrichtung(en) 7 kann/können damit gemäß Figur 3 am Frontrahmen 38 und/oder an der Schwenkkonsole 39 des Bedienstands 37 befestigt werden. Die Gebläseeinrichtung 29 aus Figur 12 kann am Rausfallschutz 41 und/oder an einem Geländer 42 des Beschickerfahrzeugs 6 befestigt werden.

Die beschriebenen Gebläseeinrichtungen 7, 29 bilden jeweils autarke Anbaumodule aus, die am Straßenfertiger 2 sowie am Beschickerfahrzeug 6 befestigt werden können, um daran unabhängig von anderen Fahrzeugaggregaten betrieben zu werden. Mit ihnen lassen sich auf dem Bedienstand 4, 37 Luftbarrieren 9, 11, 31 erzeugen, um den Bedienstand 4, 37 vor aus dem heißen Einbaumaterial gebildeten Dämpfen abzuschirmen. Des Weiteren können die jeweiligen Gebläseeinrichtungen 7, 29 zum Absaugen einer Atmosphäre im Bedienstand 4, 37 eingesetzt werden.

## Patentansprüche

1. Straßenbaumaschine (1), die in Form eines Straßenfertigers (2) oder eines Beschickerfahrzeugs (6) für einen Straßenfertiger (2) vorliegt, mit einer Gebläseeinrichtung (7, 29), die eine Gebläseeinheit (20) zum Erzeugen eines Luftstroms sowie eine mit der Gebläseeinheit (20) verbundene Luftausgabeeinheit (12, 32) umfasst, die dazu ausgebildet ist, aus dem mittels der Gebläseeinheit (20) erzeugten Luftstrom an einem Bedienstand (4, 37) der Straßenbaumaschine (1) eine Luftbarriere (9, 11, 31) für einen darin positionierten Bediener zu bilden, wobei die Gebläseeinrichtung (7, 29) als ein zur lösbaren Anbringung am Bedienstand (4, 37) der Straßenbaumaschine (1) konfiguriertes, modulares Anbaugerät (M) ausgebildet ist, **dadurch gekennzeichnet, dass** die Gebläseeinrichtung (7, 29) derart am Bedienstand (4, 37) der Straßenbaumaschine (1) angebracht ist, dass aus einem innenliegenden Bereich (13) des Bedienstands (4, 37) Luft absaugbar ist.

2. Straßenbaumaschine nach Anspruch 1, **dadurch gekennzeichnet, dass** die Gebläseeinheit (20) mindestens einen Radialventilator aufweist, eine Einströmdüse (28) mit einem in Strömungsrichtung geringer werdenden Querschnitt umfasst und/oder an einem daran ausgebildeten Gebläseeingang einen Filter aufweist.

3. Straßenbaumaschine nach einem der vorangehenden Ansprüche, **dadurch gekennzeichnet, dass** die Gebläseeinheit (20) mit einer Stromversorgungsquelle der Straßenbaumaschine (1) verbindbar ist und/oder dass die Gebläseeinrichtung (7, 29) mindestens einen eigenen Akkumulator für einen Betrieb der Gebläseeinheit (20) aufweist.

4. Straßenbaumaschine nach einem der vorangehenden Ansprüche, **dadurch gekennzeichnet, dass** die Gebläseeinrichtung eine Luftlenkungseinheit (25) umfasst, die ein Gehäuse für die Gebläseeinheit (20) bildet oder dass die Luftausgabeeinheit (32) ein Gehäuse für die Gebläseeinheit (20) bildet.

5. Straßenbaumaschine nach einem der vorangehenden Ansprüche, **dadurch gekennzeichnet, dass** die Luftausgabeeinheit (12, 32) und/oder die Luftlenkungseinheit (25) aus einem Kunststoff hergestellt sind.

6. Straßenbaumaschine nach einem der vorangehenden Ansprüche, **dadurch gekennzeichnet, dass** die Luftausgabeeinheit (12) mindestens eine in Form einer Flachdüse (18) ausgebildete Austrittsdüse (19) zum Erzeugen einer linearen Austrittsströmung als Luftbarriere (9, 11) umfasst oder die Luftausgabeeinheit (32) mindestens eine Austrittsdüse (34) zum Erzeugen einer radialen Austrittsströmung als Luftbarriere (31) umfasst.

7. Straßenbaumaschine nach einem der vorangehenden Ansprüche, **dadurch gekennzeichnet, dass** die Luftausgabeeinheit (12) zum Anpassen einer Ausrichtung der von ihr erzeugten Luftbarriere (9, 11) verdrehbar relativ zur Gebläseeinheit (20) gelagert ist.

8. Straßenbaumaschine nach einem der vorangehenden Ansprüche, **dadurch gekennzeichnet, dass** die Luftausgabeeinheit (12) zum Variieren einer Fläche der von ihr erzeugten Luftbarriere (9, 11) teleskopierbar ausgebildet ist.

9. Straßenbaumaschine nach einem der vorangehenden Ansprüche, **dadurch gekennzeichnet, dass** die Gebläseeinrichtung (7, 29) für einen werkzeuglosen An- und Abbau konfiguriert ist.

10. Straßenbaumaschine nach einem der vorangehenden Ansprüche, **dadurch gekennzeichnet, dass** die Gebläseeinrichtung (7, 29) mindestens eine Lichtquelle aufweist.

11. Straßenbaumaschine nach einem der vorangehenden Ansprüche, **dadurch gekennzeichnet, dass** die Gebläseeinrichtung (7, 29) mittels einer Bedienkonsole der Straßenbaumaschine ansteuerbar ist und/oder dass mindestens zwei Leistungsstufen für den Betrieb der Gebläseeinheit (20) direkt an der Gebläseeinrichtung (7, 29) aktivierbar sind.

12. Straßenbaumaschine (1) gemäß einem der vorangehenden Ansprüche, wobei die Gebläseeinrichtung (7) an einem Frontrahmen (8) eines Dachaufbaus des Bedienstands (4, 37) der Straßenbaumaschine (1) befestigt ist und sich die Luftausgabeeinheit (12) zumindest abschnittsweise längs des Frontrahmens (8) erstreckt, wobei die Gebläseeinrichtung (7) an einer Schwenckonsole (10, 39) für einen Fahrersitz (5) des Bedienstands (4, 37) der Straßenbaumaschine (1) befestigt ist und sich die Luftausgabeeinheit (12) in Fahrtrichtung (R) zumindest abschnittsweise entlang der Schwenkkonsole (10) erstreckt, und/oder wobei die Gebläseeinrichtung (29) an einem Rausfallschutz (30) seitlich des Fahrersitzes (5) des Bedienstands (4, 37) der Straßenbaumaschine (1) befestigt ist und die Luftausgabeeinheit (32) zum Erzeugen einer radialen Luftströmung als Luftbarriere (31) seitlich des Fahrersitzes (5) ausgebildet ist.

13. Verwendung einer als modulares Anbaugerät (M) konfigurierten Gebläseeinrichtung (7, 29) zur lösbaren Anbringung an einem Bedienstand (4, 37) einer Straßenbaumaschine (1) zum Erzeugen einer Luftbarriere (9, 11, 31), mittels welcher während des Betriebs der Straßenbaumaschine (1) entstehende Dämpfe von einem auf dem Bedienstand (4, 37) der Straßenbaumaschine (1) positionierten Bediener ferngehalten werden, **dadurch gekennzeichnet, dass** die Gebläseeinrichtung (7, 29) derart am Bedienstand (4, 37) der Straßenbaumaschine (1) angebracht wird, dass anhand der Gebläseeinrichtung (7, 29) aus einem innenliegenden Bereich (13) des Bedienstands (4, 37) Luft absaugbar ist.

## Claims

1. Road making machine (1) which is present in the form of a road finishing machine (2) or a charger vehicle (6) for a road finishing machine (2), comprising a blower means (7, 29) with a blower unit (20) for creating an airflow, and with an air discharge unit (12, 32) connected with the blower unit (20), which is designed to form an air barrier (9, 11, 31) from the airflow created by means of the blower unit (20) at a control platform (4, 37) of the road making machine (1) for an operator positioned therein, wherein the blower means (7, 29) is designed as a modular attachment apparatus (M) configured to be removably attached to the control platform (4, 37) of the road making machine (1) **characterized in that** the blower means (7, 29) is attached to the control platform (4, 37) of the road making machine (1) such that air can be sucked off from an internal region (13) of the control platform (4, 37).

2. Road making machine according to claim 1, **characterized in that** the blower unit (20) includes at least one centrifugal fan, comprises an inflow nozzle (28) with a crosssection diminishing in the direction of flow, and/or includes a filter at a blower inlet formed thereat.

3. Road making machine according to one of the preceding claims, **characterized in that** the blower unit (20) can be connected with a power supply source of the road making machine (1), and/or the blower means (7, 29) includes at least one own accumulator for an operation of the blower unit (20).

4. Road making machine according to one of the preceding claims, **characterized in that** the blower means comprises an air directing unit (25) which forms a housing for the blower unit (20), or the air discharge unit (32) forms a housing for the blower unit (20).

5. Road making machine according to one of the preceding claims, **characterized in that** the air discharge unit (12, 32) and/or the air directing unit (25) are made of plastic.

6. Road making machine according to one of the preceding claims, **characterized in that** the air discharge unit (12) comprises at least one exit nozzle (19) designed in the form of a flat nozzle (18) for creating a linear exit flow as an air barrier (9, 11), or the air discharge unit (32) comprises at least one exit nozzle (34) for creating a radial exit flow as an air barrier (31).

7. Road making machine according to one of the preceding claims, **characterized in that** the air discharge unit (12) is mounted, for adapting an orientation of the air barrier (9, 11) created by it, to be rotatable relative to the blower unit (20).

8. Road making machine according to one of the preceding claims, **characterized in that** the air discharge unit (12) has a telescopic design for varying an area of the air barrier (9, 11) created by it.

9. Road making machine according to one of the preceding claims, **characterized in that** the blower means (7, 29) is configured for an installation and deinstallation without tools.

10. Road making machine according to one of the preceding claims, **characterized in that** the blower means (7, 29) includes at least one light source.

11. Road making machine according to one of the preceding claims, **characterized in that** the blower means (7, 29) can be controlled by means of an operator control panel of the road making machine, and/or at least two power stages can be activated for the operation of the blower unit (20) directly at the blower means (7, 29).

12. Road making machine (1) according to one of the preceding claims, wherein the blower means (7) is fastened to a front frame (8) of a roof construction of the control platform (4, 37) of the road making machine (1), and the air discharge unit (12) extends longitudinally of the front frame (8) at least in sections, wherein the blower means (7) is fastened to a swivelling console (10, 39) for a driver seat (5) of the control platform (4, 37) of the road making machine (1), and the air discharge unit (12) extends, in the direction of travel (R), along the swivelling console (10) at least in sections, and/or wherein the blower means (29) is fastened to a fall-out protection (30) laterally of the driver seat (5) of the control platform (4, 37) of the road making machine (1), and the air discharge unit (32) is designed for creating a radial airflow as an air barrier (31) laterally of the driver seat (5).

13. Use of a blower means (7, 29) configured as a modular attachment apparatus (M) for removably attaching it to a control station (4,37) of a road making machine (1) for creating an air barrier (9, 11, 31) by means of which fumes produced during the operation of the road making machine (1) are kept away from an operator positioned on the control platform (4, 37) of the road making machine (1), **characterized in that** the blower means (7, 29) will be attached to the control platform (4, 37) of the road making machine (1) such that air can be sucked off from an internal region (13) of the control platform (4, 37).

## Revendications

1. Machine de construction routière (1), se présentant sous la forme d'un finisseur routier (2) ou d'un véhicule de chargement (6) pour un finisseur routier (2), avec un dispositif de soufflante (7, 29) comprenant une unité de soufflante (20) permettant de créer un flux d'air et une unité de distribution d'air (12, 32) reliée à l'unité de soufflante (20) et conçue pour, à partir du flux d'air créé par l'unité de soufflante (20), former une barrière d'air (9, 11, 31) au niveau d'un poste de commande (4, 37) de la machine de construction routière (1), à destination d'un opérateur positionné dans ledit poste de commande, dans laquelle
le dispositif de soufflante (7, 29) est réalisé sous la forme d'un accessoire modulaire (M) configuré pour être monté de manière amovible au niveau du poste de commande (4, 37) de la machine de construction routière (1), **caractérisée en ce que** le dispositif de soufflante (7, 29) est monté au niveau du poste de commande (4, 37) de la machine de construction routière (1) de telle manière que de l'air peut être extrait d'une région intérieure (13) du poste de commande (4, 37).

2. Machine de construction routière selon la revendication 1, **caractérisée en ce que** l'unité de soufflante (20) présente au moins un ventilateur radial, comprend une buse d'entrée (28) avec une section transversale qui diminue dans le sens de l'écoulement et/ou présente un filtre au niveau d'une entrée de soufflante formée sur ladite unité de soufflante.

3. Machine de construction routière selon l'une quelconque des revendications précédentes, **caractérisée en ce que** l'unité de soufflante (20) peut être reliée à une source d'alimentation électrique de la machine de construction routière (1) et/ou **en ce que** le dispositif de soufflante (7, 29) présente au moins son propre accumulateur destiné au fonctionnement de l'unité de soufflante (20).

4. Machine de construction routière selon l'une quelconque des revendications précédentes, **caractérisée en ce que** le dispositif de soufflante comprend une unité de direction d'air (25) qui forme un logement pour l'unité de soufflante (20) ou **en ce que** l'unité de distribution d'air (32) forme un logement pour l'unité de soufflante (20).

5. Machine de construction routière selon l'une quelconque des revendications précédentes, **caractérisée en ce que** l'unité de distribution d'air (12, 32) et/ou l'unité de direction d'air (25) est/sont fabriquée(s) en plastique.

6. Machine de construction routière selon l'une quelconque des revendications précédentes, **caractérisée en ce que** l'unité de distribution d'air (12) comprend au moins une buse de sortie (19) réalisée sous la forme d'une buse plate (18) et permettant de créer un flux de sortie linéaire sous la forme d'une barrière d'air (9, 11) ou **en ce que** l'unité de distribution d'air (32) comprend au moins une buse de sortie (34) permettant de créer un flux de sortie radial sous la forme d'une barrière d'air (31).

7. Machine de construction routière selon l'une quelconque des revendications précédentes, **caractérisée en ce que** l'unité de distribution d'air (12) est montée rotative par rapport à l'unité de soufflante (20) afin d'ajuster l'orientation de la barrière d'air (9, 11) qu'elle produit.

8. Machine de construction routière selon l'une quelconque des revendications précédentes, **caractérisée en ce que** l'unité de distribution d'air (12) est conçue de manière télescopique afin de faire varier la surface de la barrière d'air (9, 11) qu'elle produit.

9. Machine de construction routière selon l'une quelconque des revendications précédentes, **caractérisée en ce que** le dispositif de soufflante (7, 29) est configuré pour un montage et un démontage sans outil.

10. Machine de construction routière selon l'une quelconque des revendications précédentes, **caractérisée en ce que** le dispositif de soufflante (7, 29) présente au moins une source lumineuse.

11. Machine de construction routière selon l'une quelconque des revendications précédentes, **caractérisée en ce que** le dispositif de soufflante (7, 29) peut être commandé au moyen d'une console de commande de la machine de construction routière et/ou **en ce qu'**au moins deux niveaux de puissance pour le fonctionnement de l'unité de soufflante (20) peuvent être activés directement au niveau du dispositif de soufflante (7, 29).

12. Machine de construction routière (1) selon l'une quelconque des revendications précédentes, dans laquelle le dispositif de soufflante (7) est fixé à un cadre avant (8) d'une structure de toit du poste de commande (4, 37) de la machine de construction routière (1) et l'unité de distribution d'air (12) s'étend au moins par sections le long du cadre avant (8), dans laquelle le dispositif de soufflante (7) est fixé à une console pivotante (10, 39) destinée à un siège de conducteur (5) du poste de commande (4, 37) de la machine de construction routière (1), et l'unité de distribution d'air (12) s'étend dans la direction de déplacement (R) au moins par sections le long de la console pivotante (10), et/ou dans laquelle le dispositif de soufflante (29) est fixé à une protection contre les chutes (30) sur le côté du siège de conducteur (5) du poste de commande (4, 37) de la machine de construction routière (1), et l'unité de distribution d'air (32) est conçue pour créer un écoulement d'air radial sous la forme d'une barrière d'air (31) sur le côté du siège de conducteur (5).

13. Utilisation d'un dispositif de soufflante (7, 29), configuré en tant qu'accessoire modulaire (M) et pouvant être fixé de manière amovible au niveau d'un poste de commande (4, 37) d'une machine de construction routière (1) afin de créer une barrière d'air (9, 11, 31) au moyen de laquelle les vapeurs apparaissant pendant le fonctionnement de la machine de construction routière (1) sont tenues à l'écart d'un opérateur positionné sur le poste de commande (4, 37) de la machine de construction routière (1), **caractérisée en ce que** le dispositif de soufflante (7, 29) est mis en place au niveau du poste de commande (4, 37) de la machine de construction routière (1) de telle manière que de l'air peut être aspiré hors d'une région intérieure (13) du poste de commande (4, 37) à l'aide du dispositif de soufflante (7, 29).
